Europäisches Patentamt

European Patent Office

Office européen des brevets

(11) Veröffentlichungsnummer: **0 318 636 B1**

## EUROPÄISCHE PATENTSCHRIFT

(45) Veröffentlichungstag der Patentschrift: **04.11.92**

(21) Anmeldenummer: **88109798.4**

(22) Anmeldetag: **20.06.88**

(51) Int. Cl.⁵: **F16L 11/12**, F16L 11/08, F16L 33/22

(54) **Schlauch.**

(30) Priorität: **30.11.87 DE 8715857 U**

(43) Veröffentlichungstag der Anmeldung:
**07.06.89 Patentblatt 89/23**

(45) Bekanntmachung des Hinweises auf die
Patenterteilung:
**04.11.92 Patentblatt 92/45**

(84) Benannte Vertragsstaaten:
**AT BE CH DE ES FR GB GR IT LI LU NL SE**

(56) Entgegenhaltungen:
**DE-A- 2 361 222     DE-A- 2 749 665
DE-A- 3 103 587     FR-A- 1 182 174
FR-A- 2 146 047     FR-E- 91 165
GB-A- 2 148 437**

(73) Patentinhaber: **A. KAYSER KG INDUSTRIE-
TECHNIK
Baustrasse 38
W-3352 Einbeck(DE)**

(72) Erfinder: **Ammermann, K. Dr.,
Kleiststrasse 1,
W-3352 Einbeck(DE)**

(74) Vertreter: **Müller-Boré & Partner Patentanwälte
Isartorplatz 6 Postfach 26 02 47
W-8000 München 2(DE)**

## Beschreibung

Die Erfindung betrifft einen Schlauch wie er im Oberbegriff des Anspruchs 1 beschrieben ist.

Aus der DE-A-2 749 665 ist ein schalldämmender, flexibler Schlauch mit einer äußeren Hülle aus Schaumstoff und einem innenliegenden Gewebe bekannt. Die äußere Hülle besteht aus einem einseitig geschlossenporigen Schaumstoff mit einer dichten Außenschicht. Das sich an die äußere Hülle anschließende Gewebe ist weitmaschig und weist eine Verstärkung in Form eines Spiraldrahtes auf.

Die Geräuschentwicklung bei einer Luftzufuhr durch diesen Schlauch kann zwar vermindert werden. Jedoch ist die Geräuschentwicklung noch nicht zufriedenstellend.

Der Erfindung liegt die Aufgabe zugrunde, einen Schlauch zu schaffen, der sich durch einen geräuscharmen Betrieb auszeichnet.

Die Aufgabe wird bei einem gattungsgemäßen Schlauch durch die im kennzeichnenden Teil des Anspruchs 1 angegebenen Merkmale gelöst.

Die kunststoffummantelte Drahtspirale erlaubt durch das darum angeordnete Netzlaminat keinen Querschnittsverlust, auch nicht bei schärfsten Biegungen des Schlauches. Der Schlauch selbst ist hochflexibel und geräuschabsorbierend, so daß er in einem weiten Bereich einsetzbar ist und nicht zur Verstärkung der Motorgeräusche beiträgt.

Gemäß einer bevorzugten Ausführungsform besteht der Kunststoff, mit dem die Drahtspirale ummantelt ist, aus PVC, die Drahtspirale aus Stahldraht, das Netzlaminat aus PVC-beschichteten Glasfasern und der Schaumstoff des umhüllenden Schlauches aus PU-Schaum. Die Außenseite des Schaumstoffschlauches ist eine Luft- und wasserdichte PUR-Haut, die gleichzeitig einen Schutzschlauch gegen Marderbiß darstellt.

Vorzugsweise weisen die Anschlußkappen Gewinde zum Einschrauben in den Schlauch auf und an dem Gewinde ist eine Verrastung angeordnet. Die Verrastung besteht dabei vorzugsweise aus entgegen der Einschraubrichtung des Gewindes gerichteten Spitzen. Die Befestigung der gespritzten Anschlußkappen mit dem Netzschlauch und dem darüber angeordneten Schutzschlauch aus Schaumstoff erfolgt damit mittels eines Gewindes mit Verrastung, d.h. die Kappen können durch Hineindrehen in den Schlauch positioniert aber durch entgegengesetztes Drehen nicht mehr aus dem Schlauch herausgedreht werden.

Ausführungsbeispiele der Erfindung werden nachstehend anhand der Zeichnung näher erläutert. Es zeigt:

Fig. 1    eine erste Ausführungsform eines Luftschlauches in Seitenansicht, teilweise geschnitten,

Fig. 2    den Luftschlauch nach Fig. 1 in einer Seitenansicht, die um 90° gegenüber der Seitenansicht nach Fig. 1 gedreht ist, wobei das andere Ende teilweise geschnitten ist,

Fig. 3    einen Schnitt längs der Linie III-III von Fig. 1,

Fig. 4    in Seitenansicht eine weitere Ausführungsform eines Luftschlauches, und

Fig. 5    eine Ansicht in Richtung des Pfeiles V von Fig. 4.

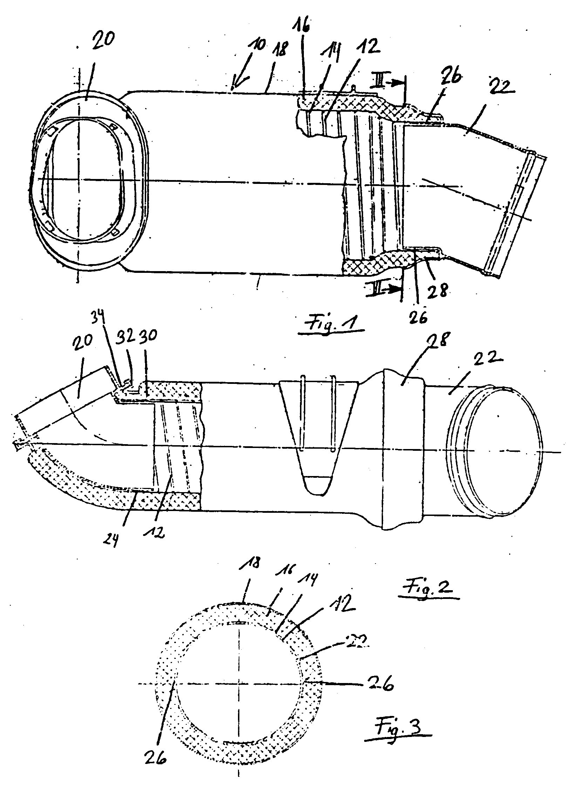

Der in Fig. 1 gezeigte Luftschlauch oder Rohluftschnorchel 10 besteht aus einer Drahtspirale 12 aus Stahldraht, die mit PVC beschichtet ist. Um die Drahtspirale 12 ist ein Netzgewebe 14 aus Glasfasern mit PVC-Umhüllung angeordnet, das mit dem Stahldraht verschweißt ist. Das Netzgewebe oder Netzlaminat sorgt dafür, daß die Drahtspirale auch bei schärfsten Biegungen keinen Querschnittsverlust erleidet.

Um die Spirale 12 aus Stahldraht und das Netz aus PVC-umhüllten Glasfasern ist ein Umhüllungsschlauch 16 aus Schaumstoff, vorzugsweise einem PU-Schaumstoff angeordnet. Abgedeckt wird dieser Schlauch 16 aus PU-Schaum von einem Schutzschlauch in Form einer Haut 18 aus PUR, die luft- und wasserdicht ist und als Schutz gegenüber Marderbissen dient.

Der Luftschlauch 10 ist im Querschnitt oval ausgebildet und mit zwei Anschlußstutzen 20, 22 versehen. Die Anschlußstutzen oder Anschlußkappen sind aus Kunststoff gespritzt. Der Anschlußstutzen 20 ist im Querschnitt oval, während der Anschlußstutzen 22 im Querschnitt kreisförmig ist, so daß das zu dem Anschlußstutzen 22 gerichtete Ende des Schlauches 10 ebenfalls kreisförmig ausgebildet ist. An dem dem Anschlußstutzen 22 hin gerichteten Ende ist der Schlauch mit einem Spannband 24 versehen, das den Schlauch in seiner ovalen Querschnittsform hält. Der Anschlußstutzen 22 ist in das Schlauchende mittels eines Gewindes hineingedreht. An dem Gewinde sind Verrastungen 26 diametral gegenüberliegend angeordnet, so daß die Anschlußkappe 22 nicht mehr aus dem Schlauch herausgedreht werden kann. Die Anschlußkappe weist an der Außenseite einen Flansch 28 auf, so daß das Ende des Schlauches 10 an der Außenseite und der Innenseite von der Kappe 22 umfaßt wird.

Die Anschlußkappe 20 ist in den Schlauch eingesteckt und hintergreift mit einer am inneren Ende angeformten Rippe 30 die Stahldrahtspirale 12, so daß die Kappe nicht mehr aus dem Schlauch herausgezogen werden kann. An der Außenseite des Endes des Schlauches 10 ist ein Ring 32 angeordnet, der an einem Flansch 34 an der Anschlußkappe 20 verriegelt ist.

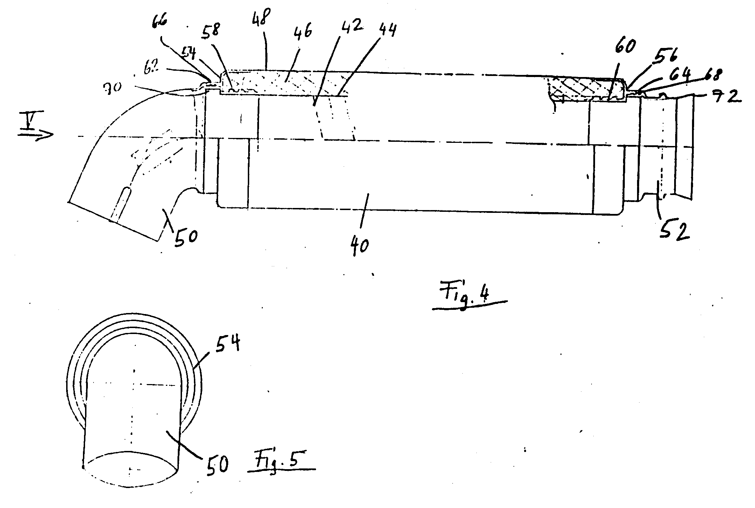

Fig. 4 zeigt einen Luftschlauch 40, der ebenfalls wie der Luftschlauch 10 hochflexibel und schallabsorbierend ist. Der Luftschlauch 40 ist wie der Luftschlauch 10 aufgebaut aus einer Stahldrahtspirale 42, einem Netzlaminat aus PV-beschichteten Glasfasern 44, einem Schlauch 46 aus Schaumstoff und einem Schutzschlauch 48 aus PUR zur Verhütung von Marderbissen. Der Schlauch 40 ist über seine ganze Länge im Querschnitt kreisförmig und an den Enden sind Anschlußkappen 50 bzw. 52 angeordnet. Zur Befestigung der Kappen 50 und 52 an dem Schlauch 40 sind an den Enden im Querschnitt T-förmige Stutzen 54, 56 angeordnet, die die Enden des Schlauches an der Innen - und Außenseite einfassen. Die Stutzen 54 und 56 sind mit einem Gewinde 58 bzw. 60 ausgebildet, welches in die Innenseite des Schlauches eingreift. Die Gewinde 58 und 60 weisen vorzugsweise Verrastungen auf, so daß sie zwar in den Schlauch eingedreht aber nicht mehr herausgedreht werden können. Die abstehenden Schenkel 62 bzw. 64 der Stutzen 54 bzw. 56 sind an der Innenseite mit Rastnuten 66 bzw. 68 ausgebildet, in welche an der Außenseite der Anschlußkappen 50 bzw. 52 angeordnete Rastrippen 70 bzw. 72 eingreifen, so daß die Anschlußkappen 50 und 52 an den Stutzen 54 bzw. 56 verrastet sind.

## Patentansprüche

1. Schlauch, insbesondere zum Ansaugen von Luft in einen Luftfilter, mit Anschlußkappen an den Enden, einer Drahtspirale, einem um diese angeordneten Netzlaminat und einem umhüllenden Schlauch aus Schaumstoff, **dadurch gekennzeichnet,** daß die Drahtspirale (12) kunststoffummantelt und das Netzlaminat (14) kunststoffbeschichtet ist.

2. Schlauch nach Anspruch 1, dadurch **gekennzeichnet,** daß die Drahtspirale (12) aus Stahldraht besteht, daß der Kunststoff, mit welchem der Stahldraht beschichtet ist, PVC ist, daß das Netzlaminat (14) aus PVC-beschichteten Glasfasern besteht und daß der Schaumstoff (16) ein PU-Schaum ist.

3. Schlauch nach Anspruch 1 oder 2, dadurch **gekennzeichnet,** daß an der Außenseite des Schaumstoffschlauches (16) ein Schutzschlauch (18) aus einer luft- und wasserdichten PUR-Haut angeordnet ist.

4. Schlauch nach einem der Ansprüche 1-3, da-durch **gekennzeichnet,** daß die Anschlußkap-pen (20, 22; 50, 52) Gewinde zum Einschrauben in den Schlauch (10, 40) aufweisen, und daß an dem Gewinde Verrastungen (26, 30; 62, 70; 64, 72) angeordnet sind.

5. Schlauch nach Anspruch 4, dadurch **gekennzeichnet,** daß die Verrastung (26) aus entgegen der Einschraubrichtung des Gewindes gerichteten Spitzen besteht.

## Claims

1. A flexible pipe, in particular for sucking air into an air filter, with connection caps on the ends, a wire helix, a net laminate disposed around this and an enveloping flexible pipe made of foam, characterised in that the wire helix (12) is encircled by plastics material and the net laminate (14) is coated with plastics material.

2. A flexible pipe according to Claim 1, characterised in that the wire helix (12) consists of steel wire, that the plastics material, which coats the steel wire, is PVC, that the net laminate (14) consists of PVC-coated glass fibres and that the foam (16) is a PU foam.

3. A flexible hose according to Claim 1 or 2, characterised in that on the outside of the flexible foam pipe (16) there is arranged a protective pipe (18) formed of an air-and water-tight PUR skin.

4. A flexible pipe according to any one of Claims 1 to 3, characterised in that the connection caps (20, 22; 50, 52) have a thread for screwing into the flexible pipe (10, 40) and that locating devices (26, 30; 62, 70; 64, 72) are arranged on the thread.

5. A flexible pipe according to Claim 4, characterised in that the locating device (26) comprises points directed in the opposite direction to the direction in which the thread is screwed.

## Revendications

1. Tuyau souple, servant notamment à aspirer de l'air dans un filtre à air, comportant des coiffes à ses extrémités, une spirale en fil métallique, un aggloméré fileté placé autour de cette dernière et un tuyau souple servant d'enveloppe en produit alvéolaire, **caractérisé en ce que** la spirale en fil métallique (12) est gainée de matière synthétique et que l'aggloméré fileté (14) est enduit de matière synthétique.

2. Tuyau souple selon la revendication 1, **caractérisé** en ce que la spirale en fil métallique (12) est en fil d'acier, en ce que la matière synthétique, dont le fil d'acier est enduit est du PVC, en ce que l'aggloméré fileté (14) est en PVC enduit de fibres de verre et en ce que le produit alvéolaire (16) est une mousse-PU.

3. Tuyau souple selon la revendication 1 ou 2, **caractérisé** en ce qu'un tuyau souple de protection (18), constitué d'une membrane-PUR étanche à l'air et à l'eau, est placé sur la face externe du tuyau souple (16) en matière alvéolaire.

4. Tuyau souple selon l'une des revendications 1-3, **caractérisé** en ce que les raccords (20,22;50,52) présentent des filetages pour le vissage dans le tuyau souple (10,40) et en ce que des encliquetages (26,30;62,70;64,72) sont placés sur le filetage.

5. Tuyau souple selon la revendication 4, **caractérisé** en ce que l'encliquetage (26) se compose de pointes dirigées en sens opposé au sens de vissage du filetage.

Fig. 1

Fig. 2

Fig. 3

Fig. 4

Fig. 5

EP 0 318 636 B1